# EUROPÄISCHE PATENTSCHRIFT

(11) **EP 3 242 764 B1**
(45) Veröffentlichungstag und Bekanntmachung des Hinweises auf die Patenterteilung: **29.12.2021**
(21) Anmeldenummer: 16700409.2
(22) Anmeldetag: 11.01.2016
(51) Int. Cl.: B23B 27/16

(54) **TRÄGERWERKZEUG**
CARRIER TOOL
PORTE-OUTIL

(30) Priorität: 09.01.2015 DE 102015000055; 18.08.2015 DE 102015010620
(43) Veröffentlichungstag der Anmeldung: 15.11.2017
(73) Patentinhaber: CeramTec GmbH, 73207 Plochingen (DE)
(72) Erfinder: HENZLER, Uwe, 73269 Hochdorf (DE)
(74) Vertreter: Fehrenbacher, Eckhard Anton
(86) Internationale Anmeldenummer: PCT/EP2016/050366
(87) Internationale Veröffentlichungsnummer: WO 2016/110596

(56) Entgegenhaltungen:
- EP-A2- 0 389 788
- WO-A1-03/013770
- WO-A1-2008/155331
- WO-A1-2012/017031
- WO-A1-2013/050520
- DE-A1- 19 854 873
- DE-A1-102005 011 955
- US-A1- 2003 086 766

## Beschreibung

Die Erfindung betrifft ein Trägerwerkzeug gemäß dem Oberbegriff des Anspruchs 1, mit einem Spannelement mit einer Spannelementnase und mit einer Schneidplatte mit einer Spannmulde auf der Schneidplattenoberfläche, zur spanenden Bearbeitung von Werkstücken, wobei die Spannmulde eine Kontur mit einer ringförmigen Einbuchtung mit einem Muldenboden aufweist, die Einbuchtung über eine Ringfläche vom Muldenboden in die Schneidplattenoberfläche übergeht und die Einbuchtung eine Erhebung umschließt, deren Spitze oberhalb des Muldenbodens und unterhalb der Schneidplattenoberfläche liegt, und die Spannelementnase dazu ausgebildet ist in die Spannmulde einzugreifen und diese dadurch auf dem Trägerwerkzeug zu spannen, wobei die Spannelementnase eine ringförmige Kontur aufweist, die die Erhebung im gespannten Zustand umschließt, jedoch keinen Kontakt mit ihr hat und ausschließlich auf der Ringfläche aufliegt. Ein derartiges Trägerwerkzeug ist aus der WO 03/013770 A1 bekannt.

Ein weiteres Trägerwerkzeug ist in der DE 198 54 873 A1 beschrieben. Beim spannen der Schneidplatte auf dem Trägerwerkzeug drückt die Spannelementnase so auf die Flanke der Erhebung, dass die Schneidplatte in den Schneidplattensitz gezogen wird. Es findet im Wesentlichen eine Punktberührung zwischen der Spannelementnase und der Erhebung statt. Die Spannpratze übt im gespannten Zustand eine Rückzugskraft auf die Schneidplatte aus, welche dadurch prozesssicher in den Plattensitz des Schneidwerkzeugs gezogen und fixiert wird.

Der Erfindung liegt die Aufgabe zugrunde, ein Trägerwerkzeug nach dem Oberbegriff des Anspruchs 1 so weiterzubilden, dass beim Schließen des Spannelementes die Kontur der Spannelementnase und die Kontur der Mulde vorzentriert wird und damit formschlüssig und positioniergenau ineinander treffen.

Erfindungsgemäß wird diese Aufgabe durch ein Trägerwerkzeug nach Anspruch 1 gelöst, wobei die Kontur der Spannelementnase und die Kontur der Spannmulde im gespannten Zustand formschlüssig und passgenau ineinander greifen und wobei das Spannelement und die Schneidplatte, zu einer Vorzentrierung der ringförmigen Kontur der Spannelementnase und der Kontur der Spanmulde zueinander, so ausgebildet sind, dass beim Eintauchen der ringförmigen Kontur in die Spannmulde, die ringförmige Kontur ausschließlich Kontakt mit der Erhebung hat und die Ringfläche nicht berührt.

Die Spannelementnase weist eine ringförmige Kontur auf, die die Erhebung im gespannten Zustand umschließt, jedoch keinen Kontakt mit ihr hat und ausschließlich auf der Ringfläche aufliegt. Beim Eintauchen der Schneidplatte auf dem Trägerwerkzeug hat die ringförmige Kontur ausschließlich Kontakt mit der Erhebung und berührt die Ringfläche nicht. Hierdurch wird beim Schließen des Spannelementes die Kontur der Spannelementnase und die Kontur der Mulde vorzentriert und dadurch können die Spannelementnase und die ringförmige Kontur formschlüssig und positioniergenau ineinander treffen oder greifen.

Bevorzugt ist die Ringfläche als Konus, Korbbogensenkung oder als Kalottenform ausgeführt. Hierdurch wird die horizontal wirkende Rückzugskraft und die vertikale wirkende Druckkraft so in die Schneidplatte eingeleitet, dass auch spröde Keramiksorten prozesssicher gespannt werden können. Die Mulde reduziert die Riss- oder Bruchgefahr bei einer keramischen Schneidplatte auf ein Minimum.

Eine Ausführungsform zeichnet sich dadurch aus, dass die Ringfläche als Ringflächenkonus ausgebildet ist, dass die Erhebung vom Muldenboden bis zur Spitze als Zentrierkonus ausgebildet ist und die ringförmige Kontur an der Spannelementnase als Spannelement-Zentrierkonus ausgebildet ist, wobei die Winkel des Zentrierkonus und des Spannelement-Zentrierkonus beide zur Schneidplattenoberfläche gesehen größer als der Winkel des Ringflächenkonus zur Schneidplattenoberfläche sind.

Bevorzugt ist die Schneidplatte eine Wendeschneidplatte und besteht aus einer Keramik oder aus CBN. Aber auch Hartmetall oder ähnliche Werkstoffe können verwendet werden. CBN zeichnet sich durch seine extreme Härte aus.

Nachfolgend wird die Erfindung anhand von Figuren weiter erläutert.

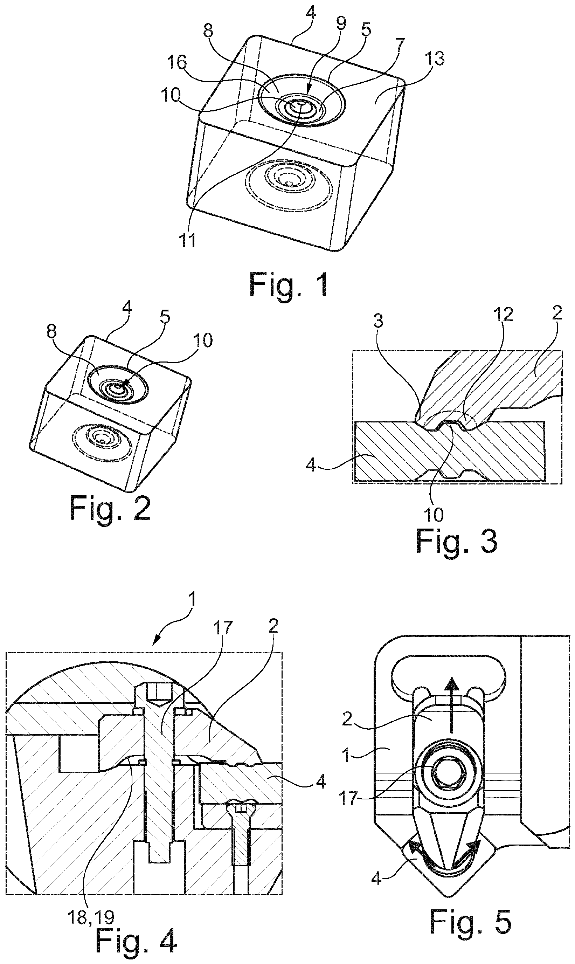

Die Figuren 1, 2 und 13 zeigen eine Schneidplatte 4 eines erfindungsgemäßen Trägerwerkzeugs, die auf der Schneidplattenoberfläche 13 eine Spannmulde 5 aufweist. Wenn im Folgenden von einer Schneidplatte gesprochen wird, so ist immer eine Wendeschneidplatte gemeint, die auch auf ihrer Unterseite eine Spannmulde 5 aufweist. Die Spannmulde 5 ist kreisförmig ausgebildet und weist einen Muldenboden 7 auf, der über eine Ringfläche 8 in die Schneidplattenoberfläche 13 übergeht. In der Mitte der Spannmulde 5 befindet sich eine Erhebung 10, im Folgenden auch als Zentrierkonus bezeichnet, deren Spitze 11 unterhalb der Schneidplattenoberfläche 13 und oberhalb des Muldenbodens 7 liegt.

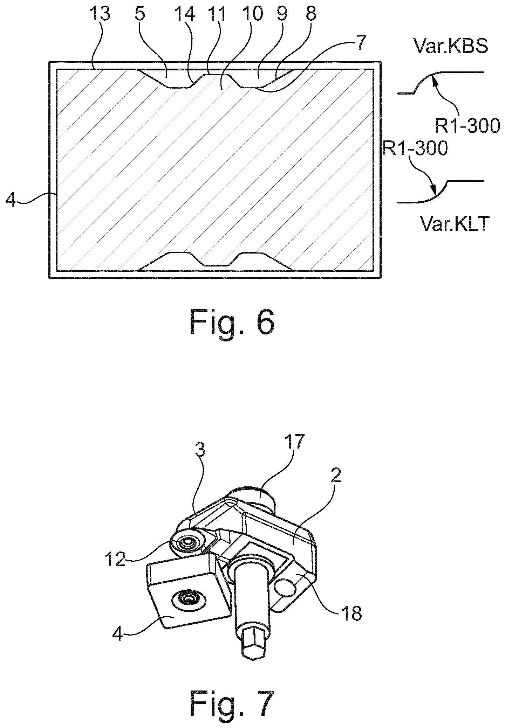

Figur 6 zeigt diese Schneidplatte 4 im Schnitt. In allen Ausführungsvarianten geht der Muldenboden 7 über eine Ringfläche 8 in die Schneidplattenoberfläche 13 über. Diese Ringfläche 8 ist in allen gezeigten Figuren konisch ausgebildet bzw. bilden einen Ringflächenkonus. Dies ist eine bevorzugte Ausführungsform. In Figur 6, rechts neben der Schneidplatte 4 sind zwei andere Ausführungsformen der Ringfläche 8 gezeigt, diese kann nämlich auch als Korbbogensenkung oder als Kalottenform ausgeführt sein. Figur 6 zeigt sehr gut die Erhebung 10, die in der Mitte der Spannmulde 5 angeordnet ist und von einer ringförmigen Einbuchtung 9 umgeben ist.

Die Erhebung 10 erstreckt sich bevorzugt vom Muldenboden 7 mit einem Zentrierkonus bis zur Spitze 11. Sehr wichtig sind die Winkel des Ringflächenkonus und des Zentrierkonus. Dies wird später beschrieben.

Figur 3 zeigt einen Schnitt durch ein erfindungsgemäßes Trägerwerkzeug. Zu sehen ist ein Spannelement 2 mit einer Spannelementnase 3. Die Spannelementnase 3 greift in die Spannmulde 5 einer Schneidplatte 4 ein und spannt diese dadurch auf dem Trägerwerkzeug 1. Die Spannelementnase 3 hat eine ringförmige Kontur 12, die die Erhebung 10 im gespannten Zustand umschließt, jedoch keinen Kontakt mit ihr hat und ausschließlich auf der Ringfläche 8 aufliegt.

Figur 4 zeigt das Trägerwerkzeug mit einem Spannelement 2, welches durch eine Schraube 17 am Trägerwerkzeug 1 befestigt ist. Am der Schneidplatte 4 abgewandten Ende weist das Spannelement 2 eine Schräge 18 auf, die auf einer ebensolchen Schräge 19 auf dem Trägerwerkzeug 1 aufliegt. Beim Befestigungsvorgang, d.h. beim Drehen der Schraube 17 gleitet die Schräge 18 am Spannelement 2 auf der Schräge 19 am Trägerwerkzeug nach unten und zieht damit die Schneidplatte 4 in ihren Sitz. Figur 3 zeigt den gespannten Zustand, in dem die ringförmige Kontur 3 am Spannelement 2 ausschließlich die Ringfläche 8 berührt.

Figur 5 zeigt das Trägerwerkzeug 1 von oben auf das Spannelement, welches gerade eine Schneidplatte 4 spannt. Mit Pfeilen sind die ziehenden Kräfte gekennzeichnet. Gut zu erkennen ist die seitliche Führung des Spannelements 2 an Führungsflächen im Trägerwerkzeug 1.

Figur 7 zeigt ein Spannelement 2 mit eingesetzter Schraube 17 und eine Schneidplatte 4 von unten. Es ist gut die Schräge 18 bzw. die Rückzugsschräge am Spannelement 2 zu sehen. Das Spannelement 2 hat an der Spannelementnase 3 eine ringförmige Kontur 3. Diese wird später noch genauer beschrieben.

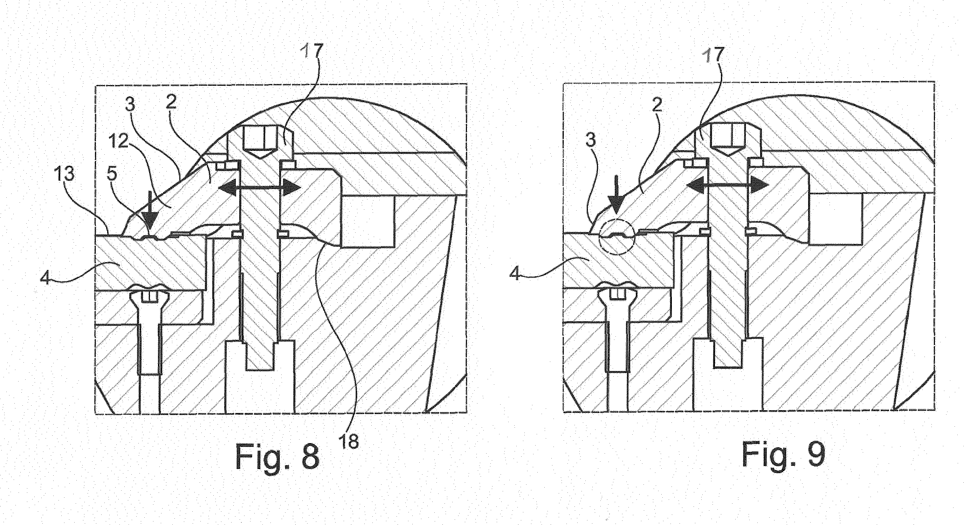

Figur 8 zeigt einen Schnitt durch ein Spannelement 2 mit eingesetzter Schraube 17 und einer Schneidplatte 4 vor dem Zusammenbau. Die Schraube 17 ist mit Spiel in das Spannelement 2 eingesetzt, damit sich beim Spannen durch die Schrägen das Spannelement 2 in Spannrichtung, d.h. weg von der Schneidplatte 4 bewegen kann.

Figur 9 zeigt einen Schnitt durch ein Spannelement 2 mit eingesetzter Schraube 17 und einer Schneidplatte 4 nach dem Zusammenbau, d.h. im gespannten Zustand. Die Spannelementnase 3 greift in die Spannmulde 5 ein und das Spannelement ist auf der Schräge nach hinten gerutscht und hat die Schneidplatte 4 in ihren Sitz gezogen.

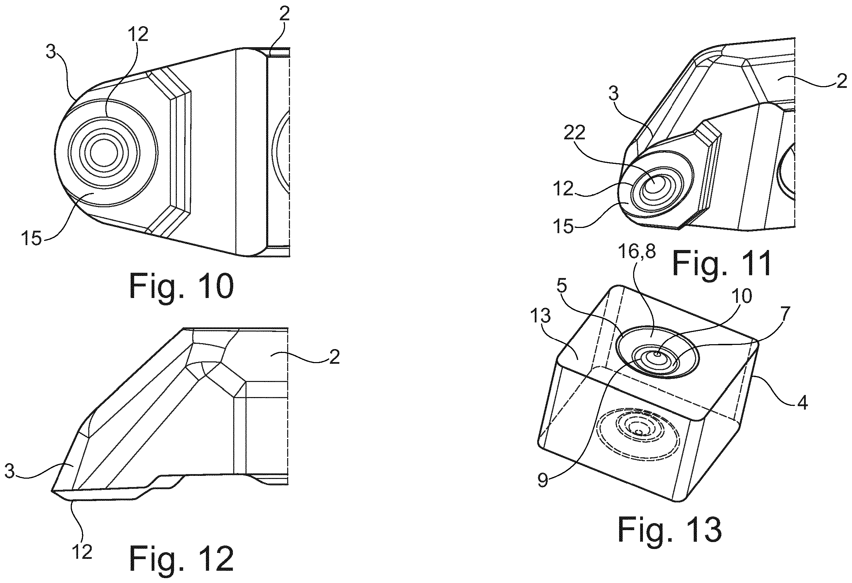

Die Figuren 10 und 11 zeigen das Spannelement 2 von unten. Am vorderen Ende des Spannelements 2 befindet sich die Spannelementnase 3 mit ihrer ringförmigen Kontur 12 und der Zentriermulde 22. Die Ringfläche 21 der Kontur 12 ist bevorzugt konisch ausgebildet. Die Kontur 12 greift im gespannten Zustand in die Spannmulde ein und umgreift die Erhebung, berührt im gespannten Zustand jedoch die Erhebung nicht, sondern nur beim Spannen.

Figur 12 zeigt das Spannelement 2 im Schnitt. Die in Richtung zur Schneidplatte 4 abstehende ringförmige Kontur 12 ist zu erkennen.

Figur 13 wurde schon weiter oben beschrieben.

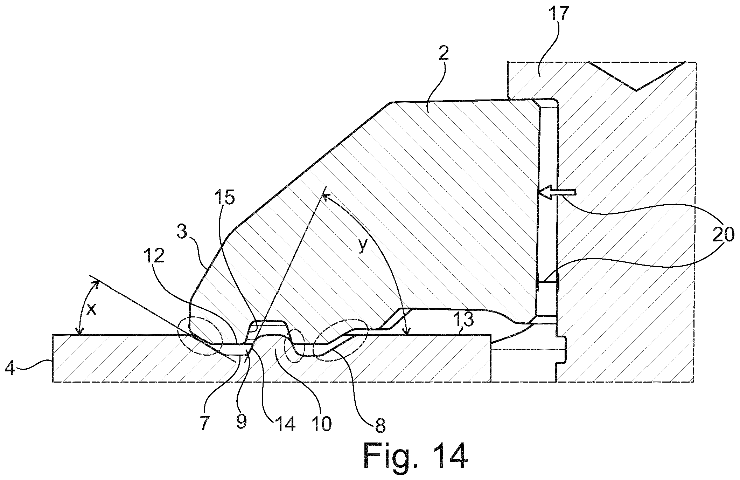

Figur 14 zeigt einen Ausschnitt des Spannelements 2 mit eingesetzter Schraube 17, die auch als Spannschraube bezeichnet wird, beim Spannen, bzw. beim Eintauchen der ringförmigen Kontur 12 an der Spannelementnase 3 in die Spannmulde 5. Figur 14 zeigt das Eintauchen, wenn sich das Spannelement 2 in vorderer Endlage befindet, d.h. wenn der maximale Spielraum 20 erreicht ist. In dieser Figur ist zu erkennen, dass beim Eintauchen die ringförmige Kontur 12 ausschließlich die Erhebung berührt und nicht die Ringfläche 8.

In dieser bevorzugten Ausführungsform ist die Ringfläche 8 als Ringflächenkonus 16 ausgebildet ist. Die Erhebung 10 ist vom Muldenboden 7 bis zur Spitze als Zentrierkonus 14 ausgebildet und die ringförmige Kontur 12 an der Spannelementnase 3 ist als Spannelement-Zentrierkonus 15 ausgebildet, wobei die Winkel Y des Zentrierkonus 14 und des Spannelement-Zentrierkonus 15 X beide zur Schneidplattenoberfläche 13 gesehen größer sind als der Winkel des Ringflächenkonus X zur Schneidplattenoberfläche 13. Der Winkel X des Ringflächenkonus zur Schneidplattenoberfläche 13 ist bevorzugt in allen Ausführungsformen kleiner als 30 Grad.

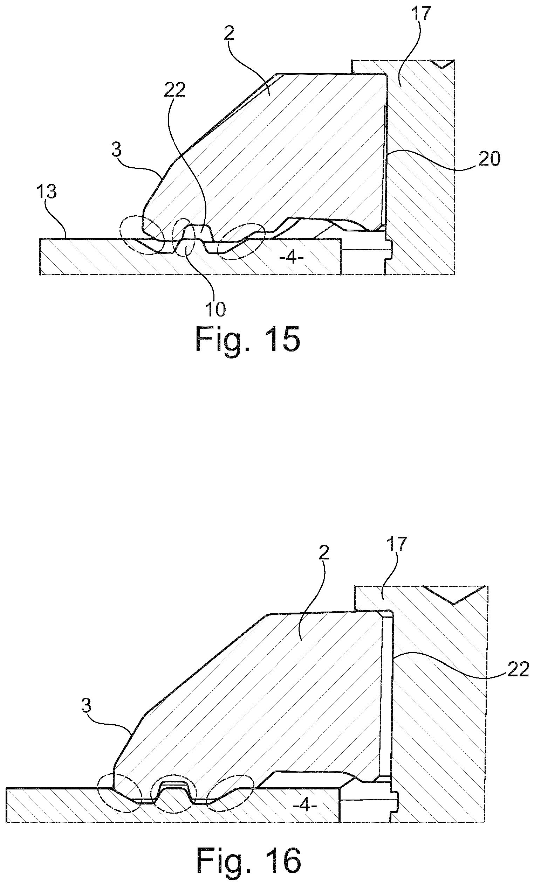

Figur 15 zeigt wie Figur 14 einen Ausschnitt des Spannelements 2 mit eingesetzter Schraube 17, die auch als Spannschraube bezeichnet wird, beim Spannen, bzw. beim Eintauchen der ringförmigen Kontur 12 an der Spannelementnase 3 in die Spannmulde 5. Figur 15 zeigt das Eintauchen, wenn sich das Spannelement 2 in hinterer Endlage befindet, d.h. wenn der minimale Spielraum 20 erreicht ist, bzw. wenn das Spannelement 2 an der Schraube 17 anliegt. Auch in dieser Figur ist zu erkennen, dass beim Eintauchen die ringförmige Kontur 12 ausschließlich die Erhebung berührt und nicht die Ringfläche 8.

Figur 16 zeigt einen Ausschnitt des Spannelements 2 mit eingesetzter Schraube 17 und der Schneidplatte 4 im gespannten Zustand. Die ringförmige Kontur 12 an der Spannelementnase 3 berührt ausschließlich die Ringfläche 8 und nicht die Erhebung 10. Zentriermulde und Zentrierkonus haben keinen Kontakt.

Die hohe Prozesssicherheit wird neben der seitlichen Führung (siehe Figur 5) hauptsächlich durch den Rückzug des Spannelementes mittels Rückzugsschräge (siehe Figur 4), dem Formschluss zwischen Spannelementkontur und Schneidplatte sowie das Drücken der Spannelementnase in die Spannmulde erzielt. Durch diese Gegebenheiten wird die Schneidplatte verdrehsicher in den Plattensitz gezogen.

## Patentansprüche

1. Trägerwerkzeug (1) mit einem Spannelement (2) mit einer Spannelementnase (3) und mit einer Schneidplatte (4) mit einer Spannmulde (5) auf der Schneidplattenoberfläche (13), zur spanenden Bearbeitung von Werkstücken, wobei die Spannmulde (5) eine Kontur mit einer ringförmigen Einbuchtung (9) mit einem Muldenboden (7) aufweist, die Einbuchtung (9) über eine Ringfläche (8) vom Muldenboden (7) in die Schneidplattenoberfläche (13) übergeht und die Einbuchtung (9) eine Erhebung (10) umschließt, deren Spitze (11) oberhalb des Muldenbodens (7) und unterhalb der Schneidplattenoberfläche (13) liegt, und die Spannelementnase (3) dazu ausgebildet ist in die Spannmulde (5) einzugreifen und diese dadurch auf dem Trägerwerkzeug (1) zu spannen, wobei die Spannelementnase (3) eine ringförmige Kontur (12) aufweist, die die Erhebung (10) im gespannten Zustand umschließt, jedoch keinen Kontakt mit ihr hat und ausschließlich auf der Ringfläche (8) aufliegt, **dadurch gekennzeichnet, dass** die Kontur der Spannelementnase (3) und die Kontur der Spannmulde (5) im gespannten Zustand formschlüssig und passgenau ineinander greifen und dass das Spannelement (2) und die Schneidplatte (4), zu einer Vorzentrierung der ringförmigen Kontur (12) der Spannelementnase (3) und der Kontur der Spanmulde (5) zueinander, so ausgebildet sind, dass beim Eintauchen der ringförmigen Kontur (12) in die Spannmulde (5), die ringförmige Kontur (12) ausschließlich Kontakt mit der Erhebung (10) hat und die Ringfläche (8) nicht berührt.

2. Trägerwerkzeug (1) nach Anspruch 1, **dadurch gekennzeichnet, dass** die Ringfläche (8) als Konus, Korbbogensenkung oder als Kalottenform ausgeführt ist.

3. Trägerwerkzeug nach einem der Ansprüche 1 oder 2, **dadurch gekennzeichnet, dass** die Ringfläche (8) als Ringflächenkonus (16) ausgebildet ist, dass die Erhebung (10) vom Muldenboden (7) bis zur Spitze als Zentrierkonus (14) ausgebildet ist und die ringförmige Kontur (12) an der Spannelementnase (3) als Spannelement-Zentrierkonus (15) ausgebildet ist, wobei die Winkel des Zentrierkonus (14) und des Spannelement-Zentrierkonus (15) beide zur Schneidplattenoberfläche (13) gesehen größer als der Winkel des Ringflächenkonus zur Schneidplattenoberfläche (13) sind.

## Claims

1. Carrier tool (1) comprising a clamping element (2) having a clamping element projection (3) and comprising a cutting plate (4) having a clamping trough (5) on the cutting plate surface (13), for machining workpieces, the clamping trough (5) having a contour with an annular indentation (9) having a trough bottom (7), the indentation (9) merging via an annular surface (8) from the trough bottom (7) into the cutting plate surface (13) and the indentation (9) enclosing an elevation (10), the tip (11) of which lies above the trough bottom (7) and below the cutting plate surface (13), and the clamping element projection (3) being designed to engage in the clamping trough (5) and thereby clamp said trough on the carrier tool (1), the clamping element projection (3) having an annular contour (12) which surrounds the elevation (10) in the clamped state, but has no contact with said elevation and rests only on the annular surface (8), **characterized in that** the contour of the clamping element projection (3) and the contour of the clamping trough (5) positively and precisely interlock in the clamped state and **in that** the clamping element (2) and the cutting plate (4), for a pre-centering of the annular contour (12) of the clamping element projection (3) and the contour of the clamping trough (5) with respect to one another, are designed such that when the annular contour (12) enters the clamping trough (5), the annular contour (12) has contact only with the elevation (10) and does not touch the annular surface (8).

2. Carrier tool (1) according to claim 1, **characterized in that** the annular surface (8) is designed as a cone, a basket arch-like depression or in a cup shape.

3. Carrier tool according to either claim 1 or claim 2, **characterized in that** the annular surface (8) is designed as an annular surface cone (16), **in that** the elevation (10) from the trough bottom (7) to the tip is designed as a centering cone (14) and the annular contour (12) on the clamping element projection (3) is designed as a clamping element centering cone (15), the angle of the centering cone (14) and the clamping element centering cone (15), both viewed toward the cutting plate surface (13), being greater than the angle of the annular surface cone to the cutting plate surface (13).

## Revendications

1. Outil de support (1) comportant un élément de serrage (2) comportant un nez d'élément de serrage (3) et comportant une plaque de coupe (4) comportant un creux de serrage (5) sur la surface de plaque de coupe (13), pour l'usinage par enlèvement de copeaux de pièces, le creux de serrage (5) présentant un contour comportant une échancrure (9) annulaire comportant un fond de creux (7), l'échancrure (9) se prolongeant depuis le fond de creux (7) dans la surface de plaque de coupe (13) par l'intermédiaire d'une surface annulaire (8) et l'échancrure (9) entourant une élévation (10), dont la pointe (11) se trouve au-dessus du fond de creux (7) et en dessous de la surface de plaque de coupe (13), et le nez d'élément de serrage (3) étant conçu pour venir en prise dans le creux de serrage (5) et le serrer ainsi sur l'outil de support (1), le nez d'élément de serrage (3) présentant un contour annulaire (12) qui entoure la surélévation (10) à l'état serré, mais n'a pas de contact avec celle-ci et repose exclusivement sur la surface annulaire (8), **caractérisé en ce que** le contour du nez d'élément de serrage (3) et le contour du creux de serrage (5) s'emboîtent par complémentarité de forme et précisément l'un dans l'autre à l'état serré et **en ce que** l'élément de serrage (2) et la plaque de coupe (4), pour un pré-centrage du contour annulaire (12) du nez d'élément de serrage (3) et du contour du creux de serrage (5) l'un par rapport à l'autre, sont conçus de telle sorte que lorsque le contour annulaire (12) plonge dans le creux de serrage (5), le contour annulaire (12) est exclusivement en contact avec l'élévation (10) et ne touche pas la surface annulaire (8).

2. Outil de support (1) selon la revendication 1, **caractérisé en ce que** la surface annulaire (8) est conçue en tant que cône, enfoncement en anse de panier ou sous forme de dôme.

3. Outil de support selon l'une des revendications 1 ou 2, **caractérisé en ce que** la surface annulaire (8) est conçue en tant que cône de surface annulaire (16), **en ce que** l'élévation (10) est conçue en tant que cône de centrage (14) depuis le fond de creux (7) jusqu'à la pointe et le contour annulaire (12) est conçu en tant que cône de centrage d'élément de serrage (15) sur le nez d'élément de serrage (3), les angles du cône de centrage (14) ainsi que du cône de centrage d'élément de serrage (15), vus par rapport à la surface de plaque de coupe (13), étant plus grands que l'angle du cône de surface annulaire par rapport à la surface de plaque de coupe (13).
